# EUROPEAN PATENT SPECIFICATION

(11) **EP 2 228 972 B1**
(45) Date of publication and mention of the grant of the patent: **01.08.2012**
(21) Application number: 09154815.6
(22) Date of filing: 10.03.2009
(51) Int. Cl.: H04M 1/02, G06F 1/16

(54) **Mobile foldable electronic terminal**
Tragbares, klappbares elektronisches Endgerät
Terminal électronique pliable portable

(43) Date of publication of application: 15.09.2010
(73) Proprietor: Research In Motion Limited, Waterloo, ON N2L 3W8 (CA)
(72) Inventor: Walker, David Ryan, Waterloo Ontario N2L 3W8 (CA); Ladouceur, Norman M, Waterloo Ontario N2L 3W8 (CA); Griffin, Jason T., Waterloo Ontario N2L 3W8 (CA)
(74) Representative: MERH-IP Matias Erny Reichl Hoffmann

(56) References cited:
- EP-A1- 0 626 632
- US-A1- 2004 145 564
- US-A1- 2008 094 792
- US-A1- 2008 151 481

## Description

This specification relates to a portable folding electronic device.

US2008/094792 describes multi-sectioned arms which are used as a basic mechanism for coupling the display and the base of a portable computer. US2008/151481 describes a portable device which includes a first casing, a second casing and a hinge which joins the first and second casings, wherein the first and second casings are capable of turning on the hinge to open and close with respect to each other. EP0626632 describes an information processing apparatus with a main body including a key-control section, a connecting section rotatably provided with respect to the main body and an input display section which is rotatably connected to the connecting section and enables pen-input. US2004/145564 describes a data processing apparatus comprising a body, a first group of control elements and a second group of control elements, a numeric keypad moveably coupled to the body, and a display moveably coupled to the numeric keypad, the display moveable from a first display position to a second display position in relation to the numeric keypad, wherein the numeric keypad is not exposed when the display is in the first position and wherein the numeric keypad is exposed when the display is in the second position.

Many portable electronic devices have a screen unit hinged to a base, with the base supporting a user interface. With such devices, the screen unit may fold down so that the screen faces the keys on the base. In this closed configuration, the screen and keys are shielded. Such folding portable devices (as, for example, a flip phone) typically have a rectangular configuration with the hinge at the short side of the base and screen unit. In consequence, the screen is long and narrow which, at least for some users, may make reading the screen difficult.

### BRIEF DESCRIPTION OF THE DRAWINGS

In the figures which illustrate example embodiments,

**FIG. 1** is a front perspective view of a portable folding electronic device made in accordance with a first embodiment,

**FIG. 2a** is an exploded view of the device of **FIG. 1**,

**FIGS. 2b, 2c,** and **2d** are perspective, top and front views, respectively, of a portion of the device of **FIG. 1****,**

**FIGS. 3a** to **3f** are perspective views illustrating operation of the device of **FIG. 1****,**

**FIG. 4** is an exploded view of a portable folding electronic device made in accordance with a second embodiment, and

**FIGS. 5a** to **5d** are perspective views illustrating operation of the device of **FIG. 4****.**

### DESCRIPTION OF PREFERRED EMBODIMENTS

In overview, a portable folding electronic device has a base with a longer length dimension and a shorter width dimension and a user interface on one surface. The user interface may be oriented for use when the base has a portrait orientation. The device also has a screen unit with a longer length dimension and a shorter width dimension and a screen on one surface. A linkage connects the base to the screen unit. The linkage provides at least two degrees of freedom between the base and the screen unit such that the screen unit may be moved to a first position folded onto the base, with the length dimension of said screen unit aligned with the length dimension of the base, and to a second position tilted with respect to the base, with the length dimension of the screen unit aligned with the width dimension of the base.

In an aspect the invention provides a portable folding electronic device having a user interface and a screen, comprising: a base having a longer length dimension and a shorter width dimension and having a user interface on one surface; a screen unit having a longer length dimension and a shorter width dimension and having a screen on one surface; and a linkage connecting said base to said screen unit through joints providing at least two degrees of freedom between said base and said screen unit such that said screen unit may be moved to a first position folded onto said base with said length dimension of said screen unit aligned with said length dimension of said base and to a second position tilted with respect to said base with said length dimension of said screen unit aligned with said width dimension of said base.

Preferably, said user interface is oriented for use when said base has a portrait orientation.

In another aspect the invention provides a portable folding electronic device having a user interface and a screen, comprising: a base having a longer length dimension and a shorter width dimension and having a user interface on one surface, said user interface oriented for use when said base has a portrait orientation; a screen unit having a longer length dimension and a shorter width dimension and having a screen on one surface; a linkage connecting said base to said screen unit, said linkage providing at least one hinge joint and at least one pivot joint between said base and said screen unit such that said screen unit may be moved to a first position folded onto said base with said length dimension of said screen unit aligned with said length dimension of said base and to a second position tilted with respect to said base with said length dimension of said screen unit aligned with said width dimension of said base.

In another aspect the invention provides a portable device having a user interface and a screen, comprising: a base having a longer length dimension and a shorter width dimension and having a user interface on one surface; a screen unit having a longer length dimension and a shorter width dimension and having a screen on one surface; at least one link arm connecting said base to said screen through a hinge connection to one of said base and said screen unit and a pivoting connection to another of said base and said screen unit such that said screen unit may be moved to a first position folded onto said base with said length dimension of said screen unit aligned with said length dimension of said base and to a second position tilted with respect to said base with said length dimension of said screen unit aligned with said width dimension of said base.

In another aspect the invention provides a portable device having a user interface and a screen, comprising: a base having a longer length dimension and a shorter width dimension and having a user interface on one surface; a screen unit having a longer length dimension and a shorter width dimension and having a screen on one surface; at least one link arm connecting said base to said screen through joints providing at least two degrees of freedom between said base and said screen unit such that said screen unit may be moved to a first position folded onto said base with said length dimension of said screen unit aligned with said length dimension of said base and to a second position tilted with respect to said base with said length dimension of said screen unit aligned with said width dimension of said base.

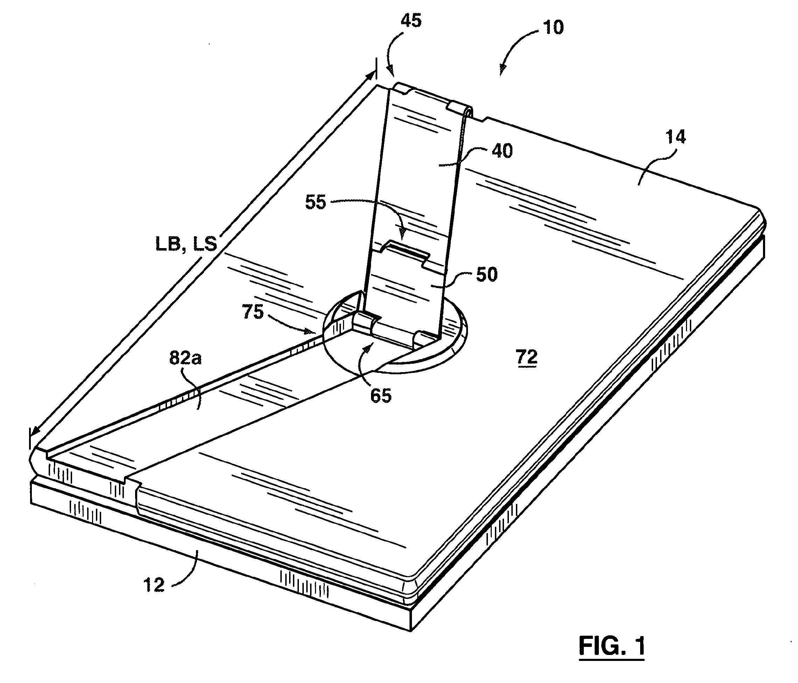

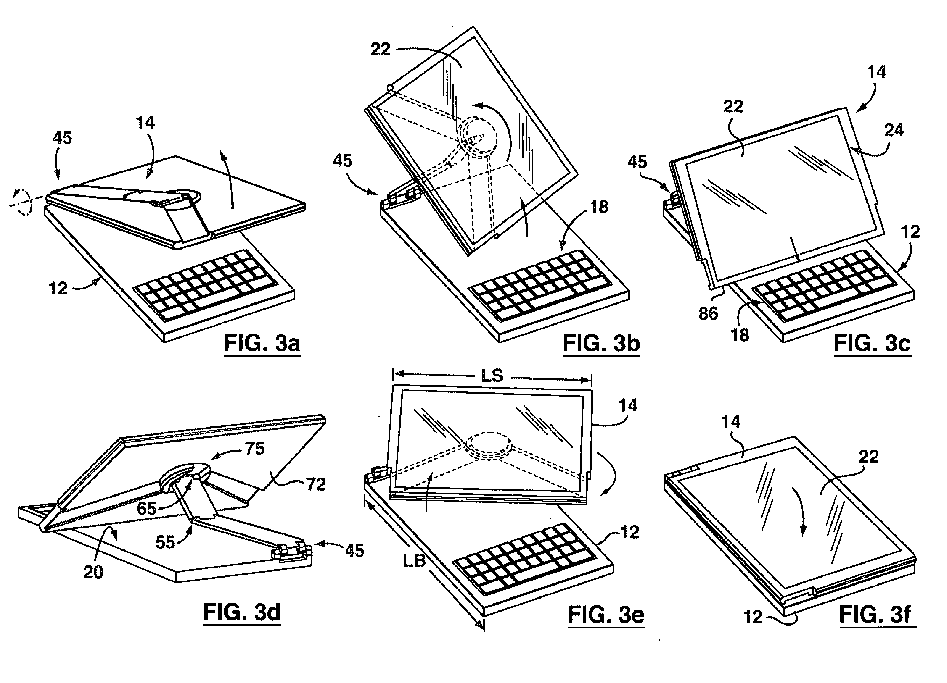

Turning to **FIGS. 1**, **2a**, **3a**, and **3b**, a portable folding electronic device **10** has a rectangular base **12** and a rectangular screen unit **14.** The base has a length dimension **LB** which is substantially equal to the length dimension **LS** of the screen unit and a width dimension **WB** which is substantially equal to the width dimension WS of the screen unit. The base houses a processor **16** and has keys on its front surface **20** arranged as a keyboard **18** disposed proximate a bottom edge **19** of the base. As will be apparent, the keyboard **18** is aligned with the width dimension **WB** of the base. Thus, the keyboard is oriented for use when the base has a portrait orientation. The screen unit has a screen **22** (**FIG. 3c**) on its front surface **24** (**FIG. 3c**)b**.**

A linkage **30** connects the base **12** to the screen unit **14** as follows. A hinge wing **32** is mounted to the top edge **34** of the base proximate one side **36** of the base. A first link arm **40** with an end **42** formed as a hinge wing is hinged to hinge wing **32** by pivot pin **44** to form a hinge joint **45**. The opposite end **46** of the first link arm **40** is also formed as a hinge wing and hinged to a hinge winged end **48** of a second link arm **50** by a pivot pin **54** to form a hinge joint **55.** The opposite end **56** of the second link arm **50** is also formed as a hinge wing and is hinged to a hinge part top section **58** of a pivot disk **60** by a pivot pin **64** to form a hinge joint **65.**

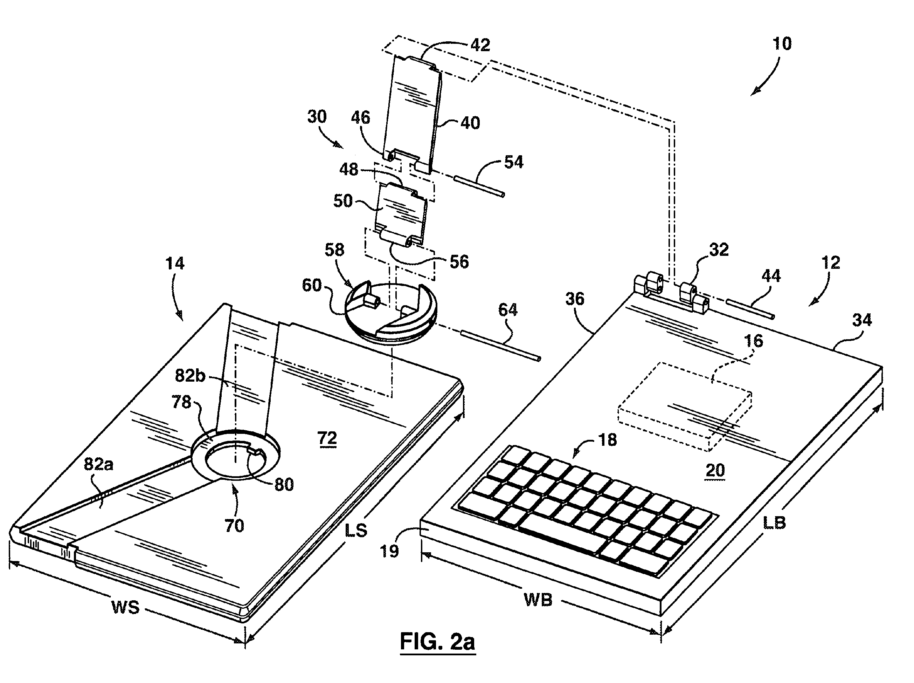

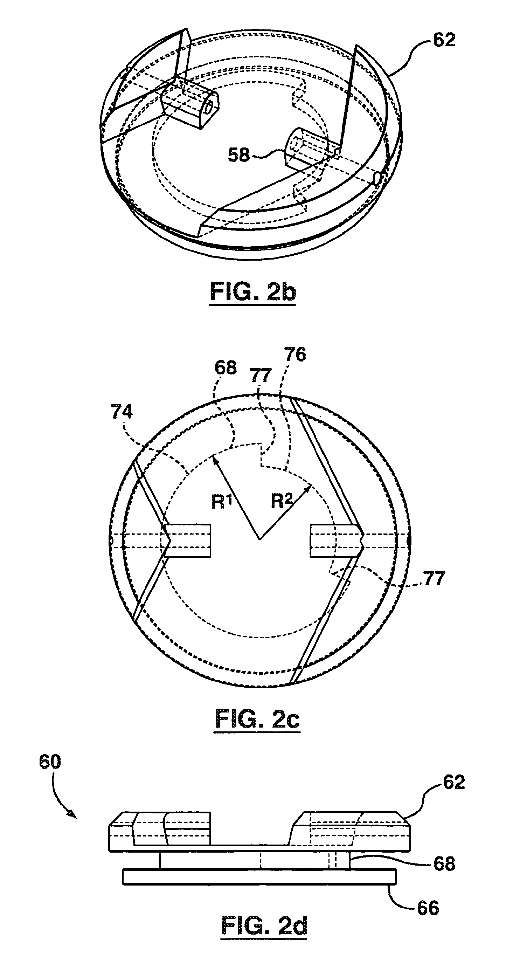

The pivot disk **60** is received for limited rotational movement by a receptor **70** in the back wall **72** of the screen unit as follows. Turning to **FIGS. 2a** to **2d****,** pivot disk **60** has a top section **62** threaded to a bottom section **66.** The assembled pivot disk has a neck **68** with a first section **74** with a radius **R1** and a second section **76** with a smaller radius **R2.** Neck section **74** transitions to neck section **76** at walls **77** which, as will become apparent, act as limit stops. The receptor **70** is formed by a circular inward step in the back wall **72** of the screen unit to an annular ring **78** with a radially inwardly projecting tang **80.** During manufacture, the bottom section **66** of the pivot disk is registered with the annular ring at the interior side of back wall **72** and the top section **62** of the pivot disk is then threaded to the bottom section. With this assembly, the top and bottom sections **62, 66** of the pivot disk sandwich the annular ring **78** which projects inwardly toward the neck **68** of the pivot disk. During assembly, the pivot disk is oriented such that the tang **80** projecting from the annular ring is located at the smaller radius section **76** of the neck **68.** The pivot disk **60** and receptor **70** thereby form a pivot joint **75** with rotational freedom limited by the limit stops **77** stopping against tang **80.**

The back wall **72** of the screen unit **14** also has a V-shaped notch with the notches **82a, 82b** of the V-shape meeting at the receptor **70.**

With this arrangement, the screen unit may be moved to a first position whereat device **10** assumes the closed configuration illustrated in **FIG. 1****.** In this configuration, the screen unit is folded onto the base with the screen unit lying against the keypad of the base with the length dimension **LS** of the screen unit aligned with the length dimension **LB** of the base. In this closed configuration, link arms **40** and **50** are aligned and lie in notch **82b.**

Referring to **FIGS. 3a** to **3f****,** device **10** may be unfolded from its stored configuration as follows. The screen unit **14** may first be pivoted about hinge **45** as seen in **FIG. 3a****.** Once the screen unit has been pivoted to a sufficient extent about hinge **45,** the screen unit may be pivoted about hinge **65,** as seen in **FIG. 3****b.** Next, the screen unit may be rotated about pivot joint **75** so that the length dimension **LS** of the screen unit becomes aligned with the width dimension **WB** of the base. The screen unit may then be again pivoted about hinge **45** to a second position tilted with respect to the base with the bottom wall **86** of the screen unit abutting the front surface **20** of the base, as shown in **FIGS. 3c** and **3d****.** The screen unit may be pivoted about hinge joint **55** to adjust the tilt of the screen unit. It will be apparent that with the screen unit at its second position illustrated in **FIGS. 3c** and **3d****,** the screen **22** of the screen unit is at the same side of the device **10** as the keyboard **18.** It will also be apparent that the bottom edge **86** of the screen unit overlies the front surface **20** of the base between the keyboard **18** and the top edge **34** of the base. With the screen unit **14** in this second position, screen **22** has a landscape orientation while the keyboard **18** has a portrait orientation on the base. The landscape orientation of the screen may make the screen easier to read.

From this second position of the screen unit illustrated in **FIGS. 3c** and **3d****,** the screen unit may be moved to a third position. More specifically, as shown in **FIG. 3e****,** the screen unit may again be rotated about pivot joint **65** so that its length dimension **LS** is again aligned with the length dimension **LB** of the base. The screen unit may then be pivoted about hinge joints **45, 55,** and **65** so that the screen unit lies atop base **12,** but this time with the screen **22** facing outwardly, as illustrated in **FIG. 3f****.** The configuration of **FIG. 3f** is a tablet-type configuration which would have advantages where screen **22** is a touch screen. In the tablet-type configuration, link arms **40**and **50** are aligned and lie in notch **82a.**

While not illustrated in **FIGS. 1** to **3f****,** the pivot disk may have a central opening through which wires from the base may pass to facilitate electrical connections between the base and screen unit.

While not preferred, in an alternate embodiment, screen unit **14** could move from the first position illustrated in **FIG. 1** to a position whereat the length dimension **LS** of the screen unit is aligned with the width dimension **WB** of the base **12** absent hinge joints **55** and **65.** Specifically, absent these hinge joints, the screen unit could still be pivoted about hinge joint **45** as illustrated in **FIG. 3a****,** however, in this embodiment, the screen unit would be pivoted about the hinge joint **45** until it made a right angle with the base. The screen unit would then be rotated about pivot joint **75** to align its length dimension with the width dimension of the base. In this position, the screen unit would be spaced from the base by the upright link arms **40, 50.** With this modification, the screen unit could not be moved to the described tablet-type configuration.

In both embodiments, the hinge joint **45** provides a first degree of freedom for the screen unit and the pivot joint **75** provides a second degree of freedom for the screen unit to allow the screen unit to move from its first position when the device is in a closed configuration to its second position whereat its length dimension **LS** is aligned with the width dimension **WB** of the base.

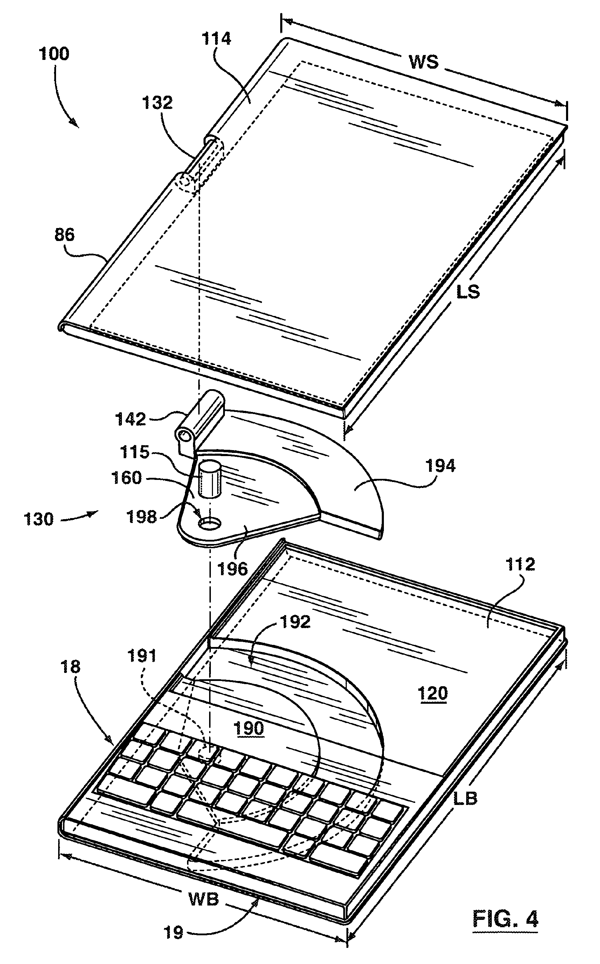

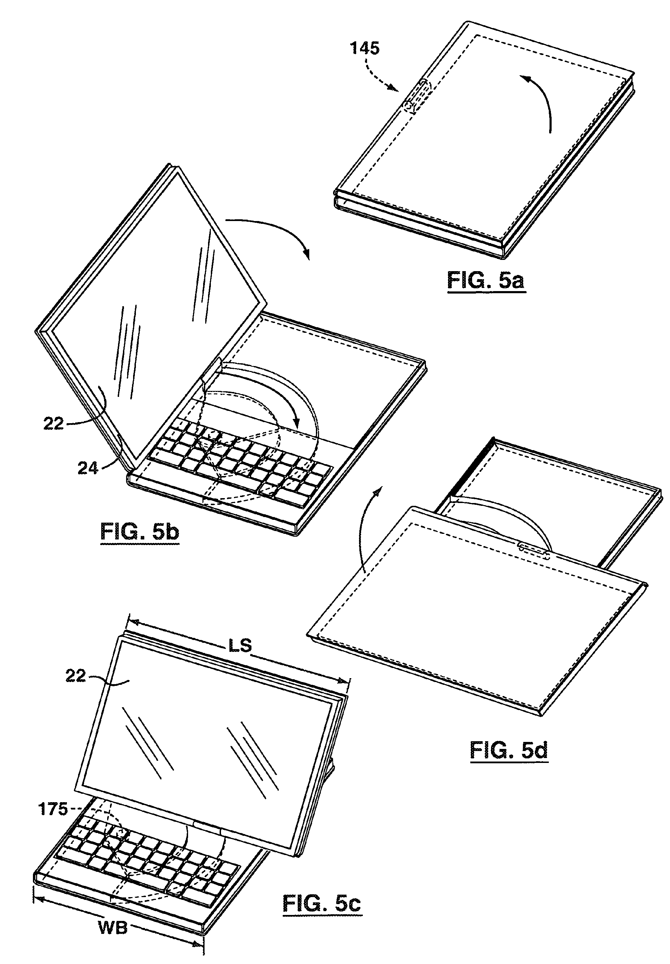

Turning to **FIG. 4****,** in another embodiment wherein like parts have been given like reference numerals, a portable folding electronic device **100** has a rectangular base **112** and a rectangular screen unit **114.** The base has a length dimension **LB** which is substantially equal to the length dimension **LS** of the screen unit and a width dimension **WB** which is substantially equal to the width dimension **WS** of the screen unit. The base houses a processor and has a keyboard **18** on its front surface **20** disposed proximate a bottom edge **19** of the base and aligned with the width dimension **WB** of the base. The screen unit has a screen **22 (****FIG. 5b****)** on its front surface **24 (****FIG. 5b****).**

The front surface **120** of base **112** has a pie-shaped depression **190** terminating at its periphery in a deeper curved notch **192.** Front surface **120** has a hole **191** at the radial centre of the pie-shaped depression **190.** The pie-shaped depression and curved notch extend under the middle portion of the keyboard **18.**

A linkage **130** connects the base **112** to the screen unit **114** as follows. A hinge wing **132** is mounted to the bottom edge **86** of the screen unit **112** midway along the bottom edge. A link arm **160** in the nature of a pivot plate with an end **142** formed as a hinge wing is hinged to hinge wing **132** by a pivot pin (not shown) to form a hinge joint **145 (****FIG. 5a****).**

The link arm **160** has a peripheral thickened curved band **194** and a thinner pie-shaped inner section **196** with a hole **198.** The curved band of the link arm is received within the curved notch **192** in the front surface of the base **112** and the pie-shaped inner section **196** of the link arm is received within the pie-shaped depression of the base **112.** A pin **115** extends through the holes **191** and **198** and abuts the back side of the keyboard **18** to lock the link arm to the base **112** and provide a pivot joint **175 (****FIG. 5c****).**

In manufacture, the link arm is first secured to the base **112** by pin **115** and then the keyboard is installed. Thereafter, the screen unit may be attached to the base **112** by completing hinge joint **145.**

The pin joining the link arm to the base may be annular and receive wires from the base to allow for an electrical connection between the base and screen unit.

Turning to **FIGS. 5a** to **5d****,** in use, device **100** may be unfolded from its stored configuration seen in **FIG. 5a** as follows. The screen unit **114** may first be pivoted about hinge **145** as seen in **FIG. 5a****.** Next the screen unit may be twisted from its position shown in **FIG. 5b** to the position shown in **FIG. 5c** by rotating the link arm **160.** The length of the curved band **194** of the link arm and the curved notch **192** in the base provide limit stops to the rotation of the link arm. In the position shown in **FIG. 5c****,** the length dimension **LS** of the screen unit **114** is aligned with the width dimension **WB** of the base **112.** In this position, the tilt of the screen unit can be adjusted by pivoting the screen unit about hinge **145.** Optionally, from the position of the screen unit in **FIG. 5c****,** the screen unit could be quickly folded down to the position shown in **FIG. 5d** should a user wish to temporarily shield the keyboard and screen.

Alternatively, the device **100** could be unfolded from its stored configuration shown in **FIG. 5a** by first rotating the screen unit to the position shown in **FIG. 5d** and then pivoting the screen unit about hinge **145** to the position shown in **FIG. 5c****.** As a further option, the screen unit may be moved from its stored configuration of **FIG. 5a** to the open position of **FIG. 5c** in one fluid motion wherein the screen unit is simultaneously rotated and pivoted.

While the base of the devices has been described as having a keyboard, any suitable user interface may be provided. For example, the user interface of the base could comprise one or more of the following: keyboard, keypad, touch screen, game pad interface, track ball, and gesture pad. Where the user interface included a touch screen, this could function as both an input and an output device.

While the exemplary devices shown have a rectangular base and a rectangular screen unit, other shapes would be possible provided they have a longer length dimension and a shorter width dimension.

Other modifications will be apparent to those skilled in the art.

## Claims

1. A portable folding electronic device (10) having a user interface (18) and a screen (22), comprising:
a base (12) having a longer length dimension and a shorter width dimension and having a user interface (18) on one surface;
a screen unit (14) having a longer length dimension and a shorter width dimension and having a screen on one surface and a first notch (82b) and a second notch (82a) forming a V-shaped notch on an opposite surface; and
a linkage (30) connecting said base to said screen unit through joints (45, 75) providing at least three degrees of freedom between said base and said screen unit such that said screen unit may be moved to a first position folded onto said base with said length dimension of said screen unit aligned with said length dimension of said base and said linkage aligned with, and lying in, said first notch (82b), to a second position tilted with respect to said base with said length dimension of said screen unit aligned with said width dimension of said base, and to a third position folded onto said base with said length dimension of said screen unit aligned with said length dimension of said base and with said screen facing directly away from said user interface and said linkage aligned with, and lying in, said second notch (82a).

2. The device of claim 1 wherein, when said screen unit (14, 114) is in said first position, said screen (22) faces said user interface (18) and, when said screen unit is in said second position, said screen is at a same side of said device as said user interface.

3. The device of claim 1 or claim 2 wherein a bottom edge (19) of said base is aligned with said width dimension of said base and said user interface (18) is disposed proximate said bottom edge of said base and wherein, when said screen unit is in said second position, a bottom edge (86) of said screen unit overlies said one surface of said base between said user interface and a top edge (34) of said base.

4. The device of any one of claim 1 to claim 3 wherein said length dimension of said base (12, 112) is substantially the same as said length dimension of said screen unit (14, 114) and wherein said width dimension of said base is substantially the same as said width dimension of said screen unit.

5. The device of any one of claim 1 to claim 4 wherein said linkage comprises a link arm (40) and wherein said joints comprise a hinge joint (45) extending between said link arm and one of said base and said screen unit.

6. The device of claim 5 wherein said joints comprise a pivot joint (75) extending between said link arm and another of said base and said screen unit.

7. The device of claim 6 wherein said link arm is a first link arm (40) and wherein said linkage further comprises a second link arm (50) and wherein said pivot joint (75) extends between said second link arm and another of said base and said screen unit.

8. The device of any one of claim 5 to claim 7 wherein said hinge joint is a first hinge joint (45) and wherein said linkage further provides a second hinge joint (65) between said base and said screen unit so that said screen unit may be moved to said third position folded onto said base with said length dimension of said screen unit aligned with said length dimension of said base and with said screen facing directly away from said user interface.

9. The device of claim 8 wherein said second hinge joint (65) is at said pivot joint (75).

10. The device of claim 7 wherein said first link arm is joined to said second link arm by a hinge joint (55).

11. The device of claim 8 wherein said first hinge joint (45) extends between said base and said link arm (40) at a top edge (34) of said base, said top edge extending along said width dimension of said base.

12. The device of any one of claim 1 to claim 11 wherein said screen is a touch screen.

13. The device of any one of claim 1 to claim 12 wherein said user interface comprises a plurality of keys (18).

## Patentansprüche

1. Eine tragbare klappbare elektronische Vorrichtung (10), die eine Benutzterschnittstelle (18) und bildschirm (22) hat, die aufweist:
eine Basis (12) mit einer längeren Längendimension und einer kürzeren Breitendimension und mit einer Benutzerschnittstelle (18) auf einer oberfläche;
eine Bildschirmeinheit (14) mit einer längeren Längendimension und einer kürzeren Breitendimension und mit einem Bildschirm auf einer Oberfläche und einer ersten Aussparung (82b) und einer zweiten Aussparung (82a),
die eine V-förmige Aussparung bildern, auf einer entgegengesetzten Oberfläche; und
ein Verbindungsstück (30), das die mit der Bildschirmeinheit über Gelenke (45, 75) verbindet, die zumindest drei Freiheitsgrade zwischen der Basis und der Bildschirmeinheit vorsehen derart, dass die Bildschirmeinheit in eine erste Position bewegt werden kann, geklappt auf die Basis, wobei die Längendimension der Bildschirmeinheit ausgerichtet ist mit der Längendimension der Basis und das Verbindungsstück mit der ersten Aussparung (82b) ausgerichtet ist und darin liegt, in eine zweite Position, geneigt in Bezug auf die Basis, wobei die Längendimension der Bildschirmeinheit ausgerichtet ist mit der Breitendimension der Basis, und in eine dritte Position, geklappt auf die Basis, wobei die Längendimension der Bildschirmeinheit ausgerichtet ist mit der Längendimension der Basis und wobei der Bildschirm direkt abgewandt ist von der Benutzerschnittstelle und das Verbindungsstück mit der zweiten Aussparung (82a) ausgerichtet ist und darin liegt.

2. Die Vorrichtung gemäß Anspruch 1, wobei, wenn die Bildschirmeinheit (14, 114) in der ersten Position ist, der Bildschirm (22) der Benutzerschnittstelle (18) zugewandt ist, und wenn die Bildschirmeinheit in der zweiten Position ist, der Bildschirm auf einer selben Seite der Vorrichtung ist wie die Benutzerschnittstelle,

3. Die Vorrichtung gemäß Anspruch 1 Anspruch 2, wobei eine untere Kante (19) der Basis ausgerichtet ist mit der Breitendimension der Basis und die Benutzerschnittstelle (18) in der Nähe der unteren Kante der Basis ungeordnet ist und wobei, wenn die Bildschirmeinheit in der zweiten Position ist, eine untere Kante (86) der Bildschirmeinheit über der einen Oberfläche der Basis zwischen der Benutzerschnittstetie und einer oberen Kante (34) der Basis liegt.

4. Die Vorrichtung gemäß einem von Anspruch 1 bis Anspruch 3, wobei die Längendimension der Basis (12, 112) im Wesentlichen gleich ist zu der Längendimension der Bildschirmeinheit (14,114) und wobei die Breitender Basis im Wesentlichen gleich ist zu der Breitendimension der Bildschirmeinheit.

5. Die Vorrichtung gemäß von Anspruch 1 bis Anspruch 4, wobei das Verbindungsstück einen Verbindungsarm (40) aufweist und wobei die Geein Scharniergelenk (45) aufweisen, das sich zwischen dem Verbindungsarm und einem der Basis und dem Bildschirm erstreckt.

6. Die Vorrichtung gemäß Anspruch 5, wobei die Gelenke ein Drehgelenk (75) aufweisen, das sich zwischen Verbindungsarm und einem anderem der Basis und dem Bildschirm erstreckt.

7. Die Vorrichtung gemäß Anspruch 6, wobei der Verbindungsarm ein erster Verbindungsarm (40) ist und wobei das Verbindungsstück weiter einen zweiten Verbindungsarm (50) aufweist und wobei sich das Drehgelenk (75) zwischen dem zweiten Verbindungsarm und einem anderen der Basis und der Bildschirmeinheit erstreckt.

8. Die Vorrichtung gemäß einem von Anspruch 5 bis Anspruch 7, wobei das Scharniergelenk ein erstes Scharniergelenk (45) ist und wobei das Verbindungsstück weiter ein zweites Scharniergelenk (65) zwischen der Basis und der Bildschirmeinheit vorsieht derart, die Bildschirmeinheit in die dritte Position bewegt werden kann, auf die Basis geklappt, wobei die Längendimension der Bildschirmeinheit ausgerichtet ist mit der Langendimension der Basis und wobei der Bildschirm direkt abgewandt von der Ben utzerschnittstelle ist.

9. Die Vorrichtung gemäß Anspruch 8, wobei das zweite Scharniergelenk (65) an drehgelenk (75) ist.

10. Die Vorrichtung Anspruch 7, wobei der erste Verbindungsarm mit dem zweiten Verbindungsarm durch ein Scharniergelenk (55) verbunden ist.

11. Die Vorrichtung Anspruch 8, wobei sich das erste Scharniergelenk (45) zwischen der und dem Verbindungsarm (40) an oberen Kante (34) der erstreckt, wobei sich die obere Kante entlang der Breitendimension der erstreckt.

12. Die Vorrichtung gemäß einem von Anspruch 1 bis Anspruch 11, wobei der Bildschirm ein Berührungsbildschirm ist.

13. Die Vorrichtung gemäß einem von Anspruch 1 bis Anspruch z..2, wobei die Benutzerschnittstelle eine Vielzahl von Tasten (18) aufweist.

## Revendications

1. Dispositif électronique portatif pliable (10) ayant une interface utilisateur (18) et un écran (22), comprenait :
une base (12) ayant une dimension de longueur plus grande et une dimension de largeur plus courte et ayant une interface utilisateur (18) sur une surface ;
une unité d'affichage (14) ayant une dimension de longueur plus grande et une dimension de largeur plus courte et ayant un écran sur une surface et une première encoche (82b) et une deuxième encoche (82a) fermant une encoche en forme de V sur une surface opposée ; et
une liaison (30) reliant ladite base à ladite unité d'affichage par des joints (45, 75) fournissant au moins trois degrés de liberté entre ladite base et ladite unité d'affichage de sorte que ladite unité d'affichage puisse être déplacée vers une première position repliée sur ladite base avec ladite dimension de longueur de ladite unité d'affichage alignée avec ladite dimension de longueur de ladite base et ladite liaison alignée avec ladite première encoche (82b), et se trouvant dans celle-ci, vers une deuxième position inclinée par rapport à ladite base avec ladite dimension de longueur de ladite unité d'affichage alignée avec ladite dimension de largeur de ladite base, et vers une troisième position repliée sur ladite base avec ladite dimension de longueur de ladite unité d'affichage alignée avec ladite dimension de longueur de ladite base et avec ledit écran directement détourné de ladite interface utilisateur et ladite liaison étant alignée avec laite deuxième encoche (82a), et se trouvant dans celle-ci.

2. Dispositif de la revendication 1, dans lequel, lorsque ladite unité d'affichage (14, 114) est dans ladite première position, ledit écran (22) fait face à ladite interface utilisateur (18) et, lorsque ladite unité d'affichage est dans ladite deuxième position, ledit écran est situé du même côté dudit Dispositif que ladite interface utilisateur.

3. Dispositif de la revendication 1 ou 2, dans lequel un bord inférieur (19) de ladite base est aligné avec ladite dimension de largeur de ladite base et ladite interface utilisateur (18) est disposée à proximité dudit bord inférieur de ladite base et dans lequel, lorsque ladite unité d'affichage est dans ladite deuxième position, un bord inférieur (86) de ladite unité d'affichage recouvré ladite surface de ladite base entre ladite interface utilisateur et un bord supérieur (34) de ladite base.

4. Dispositif de l'une quelconque des revendications 1 à 3, dans lequel ladite dimension de longueur de ladite base (12, 112) est essentiellement la même que ladite dimension de longueur de ladite unité d'affichage (14, 114), et dans lequel ladite dimension de largeur de ladite base est essentiellement la même que ladite dimension de largeur de ladite unité d'affichage.

5. Dispositif de l'une quelconque des revendications 1 à 4, dans lequel ladite liaison comprend un bras de liaison (40), et dans lequel lesdits joints comprennent un joint à charnière (45) s'étendant entre ledit bras de liaison et l'une de ladite base et de ladite unité d'affichage.

6. Dispositif de la revendication 5, dans lequel lesdits joints comprennent un joint pivotant (75) s'étendant entre ledit bras de liaison et l'autre de ladite base et de ladite unité d'affichage.

7. Dispositif de la revendication 6, dans lequel ledit bras de liaison est un premier bras de liaison (40), et dans lequel ladite liaison, comprend en outre un deuxième bras de liaison (50), et dans lequel ledit joint pivotant (75) s'étend entre ledit deuxième bras de liaison et l'autre de ladite base et de ladite unité d'affichage.

8. Dispositif de l'une quelconque des revendications 5 à 7, dans lequel ledit joint à charnière est un premier joint à charnière (45), et dans lequel ladite liaison fournit en outre un deuxième joint à charnière (65) entre ladite base et ladite unité d'affichage de sorte que ladite unité d'affichage puisse être déplacée vers ladite troisième position repliée sur ladite base avec ladite dimension de longueur de ladite unité d'affichage alignée avec ladite dimension de longueur de ladite base et avec ledit écran directement détourné de ladite interface utilisateur.

9. Dispositif de la revendication 8, dans lequel ledit deuxième joint à charnière (65) est situé au niveau dudit joint pivotant (75).

10. Dispositif de la revendication 7, dans lequel ledit premier bras de liaison est relié audit deuxième bras de liaison far une joint à charnière (55).

11. Dispositif de la revendication 8, dans lequel ledit premier joint zip charnière (45) s'étend entre laite base et ledit bras de liaison (40) au niveau d'un bord supérieur (34) de ladite base, ledit bord supérieur s'étendant le long de ladite dimension de largeur de ladite base.

12. Dispositif de l'une quelconque des revendications 1 à 11, dans lequel ledit écran est un écran tactile.

13. Dispositif de l'une quelconque des revendications 1 à 12, dans lequel ladite interface utilisateur comprend une pluralité de touches (18).
